Europäisches Patentamt

European Patent Office

Office européen des brevets

(11) Publication number: 0 388 536
A2

# EUROPEAN PATENT APPLICATION

(21) Application number: 89202395.3

(22) Date of filing: 23.09.89

(51) Int. Cl.⁵: B65G 23/36, B65G 17/20

(30) Priority: 24.03.89 IT 2078989 U

(43) Date of publication of application:
26.09.90 Bulletin 90/39

(84) Designated Contracting States:
DE ES FR GB

(71) Applicant: FATA SUD S.P.A.
Via Tagliatelle S.S. 87
I-81020 S.Marco Evangelista (Caserta)(IT)

(72) Inventor: Cucinotta, Piero
C.so Vittorio Emanuele, 233/d
I-10139 Torino(IT)
Inventor: Monto', Michele
Via A. De Gasperi, 34
I-81020 S. Nicola (Caserta)(IT)
Inventor: De Meo, Giuseppe
Via Napoli, 48
I-81022 Casagiove (Caserta)(IT)

(74) Representative: Faraggiana, Vittorio, Dr. Ing.
Ingg. Guzzi e Ravizza S.r.l. Via Boccaccio, 24
I-20123 Milano(IT)

(54) Chain conveyor with vertical sections and selectively operating motors.

(57) A chain conveyor of the type carrying a plurality of loads and having a tractive motor with controlled speed and a plurality of virtually vertical and horizontal sections comprises in accordance with the present invention at the exit of each vertical section an intermittently operating motorized tractive sprocket and a control device connected to the motor of each motorized sprocket for actuation thereof and to selective consent means for actuation of said motorized sprockets, there being actuated by a load a motorized sprocket at the beginning of the corresponding vertical section, whether ascending or descending, and said sprocket being deactuated at the end of said vertical section to allow traction of said sprocket as it idles. The tractive chain is thus subjected at the most to a traction virtually comparable to the force necessary to lift a single load. The tractive motor can also be commanded to rotate at a higher speed when no load is at the vertical sections than when a load is traveling over one of said sections.

## CHAIN CONVEYOR WITH VERTICAL SECTIONS AND SELECTIVELY OPERATING MOTORS

Chain conveyors are known in which there are alternate horizontally moving sections and vertical ascending and descending sections near the work stations.

One problem in these systems is the sizing of the chain and the tractive motor thereof because of the extreme variabiality of the stresses to which these elements are subjected by the loads which must be lifted in the vertical sections and merely translated in the horizontal sections.

The difference between the minimum and maximum stresses is particularly great when the vertical sections are equidistant and spaced the same distance as between the suspended loads since in this case the loads must all travel over the vertical or horizontal sections simultaneusly and there is maximum stress when the loads are lifted vertically simultaneously and there are periods of smaller stress when said loads travel over horizontal sections.

This involves, especially in the case of relatively large loads, a limitation on the length of the conveyor and the number of loads and hence the number of work stations which can be served because for technical and economical reasons it is not possible to use exceptionally strong chains as would otherwise be necessary.

In addition if it is necessary to increase the number of work stations served it is not sufficient to extend the conveyor but it must be entirely replaced with one able to withstand the increased number of loads.

The known solutions consisting of dividing the path in several sections with the resulting problems related with handling the loads between the different sections are equally complicated and costly and hence unsatisfactory.

The general purpose of the present invention is to obviate the abovementioned drawbacks by providing a chain conveyor of the type having alternating vertical and horizontal sections which could be accomplished in the desired length without problems of excessive pulls for the chain and efforts in the main tractive motor and said length being variable within broad limits without the need of entirely replacing the conveyor.

In view of said purpose it has been sought to realize in accordance with the invention a chain conveyor of the type bearing a plurality of loads and having a tractive motor with controlled speed and a plurality of sections traveling vertically and horizontally characterized in that it comprises at the exit of each vertical section an intermittently operating motorized tractive sprocket and a control device connected to the motor of each motorized sprocket for actuation thereof and to selective consent means for actuation of said motorized sprockets, there being actuated by a load a motorized sprocket at the beginning of the corresponding vertical section, whether ascending or descending, and said sprocket being deactuated at the end of said vertical section to allow traction of said sprocket as it idles.

To make clearer the explanation of the innovative principles of the present invention and the advantages thereof as compared with the known art there is described below with the aid of an annexed schematic drawing a possible embodiment as an example of an application of said principles.

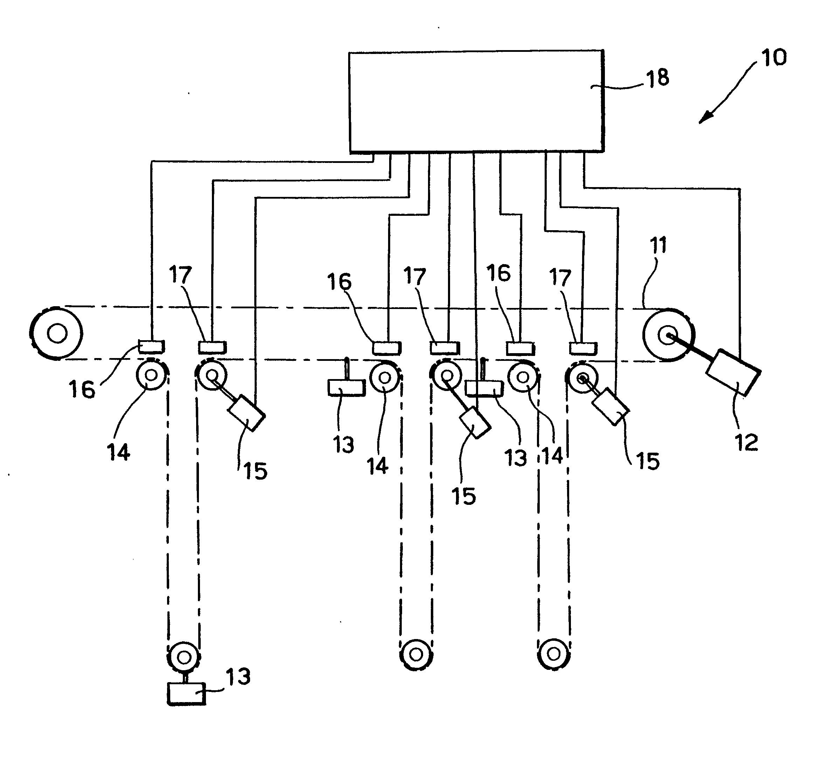

With reference to the figure a conveyor system indicated generally by reference number 10 with a chain way 11 provided with horizontal and vertical sections by the use of idling sprockets comprises a main direct current tractive motor 12 for example with speed control of known type.

Connected to the chain 11 there are loads 13 spaced in such a manner that two loads are not found simultaneously on the same vertical section.

Up to this point the known art has been described.

In accordance with the invention while the upper transmission sprockets 14 at the entrance to the descending sections are idlers the upper transmission sprockets 15 at the exit of the descending sections are motorized sprockets with ON-OFF torque motors.

Near the idling sprockets 14 there are first sensors 16 for a passing load 13 and similarly near the motorized sprockets 15 there is a second passing load sensor 17. Said first and second sensors can be profitably realized with simple electrical limit switches.

The main motor 12, the raising motors 15 and the sensors 16 and 17 are connected for operation to a control device 18 realized in accordance with the known art, e.g. electronic with wired or programmed logic, or electromechanical with a relay, not further described since it can be readily immagined by those skilled in the art.

During operation the controller 18 actuates only the motor 12 for advancing the chain while the loads are on the horizontal sections.

Under these conditions the motorized sprockets are not powered and are thus entrained by the movement of the chain while idling.

When a sensor 16 signals that a load is about to enter a descending section the controller 18 starts the motor 15 corresponding to said section. The load then travels over the vertical section while the actuated motor 15 absorbs the increased effort due to vertical movement thereof.

Similarly when a sensor 17 signals that a load is leaving a vertical section the controller turns off power to the corresponding motorized sprocket 15 which resumes idling while being entrained by the chain.

The above operating cycle occurs for each load that goes through vertical sections. The number of motors 15 actuated is thus variable and is equal at all times to the number of loads present on the vertical sections.

It should be noted that as operation of the motors 15 is intermittent and they are all entrained by the same chain when not powered, perfect synchronization of their movement is not necessary since the small differences which could occur during any simultaneous operation thereof are cancelled out during their traction when idling. In practice the motors start again in step with each subsequent actuation thereof.

In accordance with the invention the lead motor 12 becomes the control motor and no longer the power motor as in the known art since it no longer supplies all the torque necessary for movement of the loads but only the torque necessary for completing the torque supplied by the motors 15 so as to obtain a predetermined movement pattern of the chain.

The benefit of using low-cost asynchronous alternating current motors is secured due to the fact that there is no need for strict control of the speed of the motors 15.

The tractive chain is subject to traction which is at most comparable to the force necessary for lifting a single load and in this manner the conveyance system acquires considerable modularity since a conveyance path of varying length may be obtained merely by varying the length of the chain and increasing the work stations served, adding at each new vertical section a simple motorized sprocket and a motor with ON-OFF actuation, there being no need within broad limits of replacing the chain with a stronger type.

It is thus seen that the system in accordance with the invention has obvious advantages as compared with the known art where the traction on the chain and the effort required of the tractive motor had a maximum value approximately equal to the total of the forces required for lifting each load present on a vertical section of the conveyor and this required redesigning the conveyor in case of an increase in the number of vertical sections.

Where the advantages of the invention are even more apparent is when the vertical sections are all equal in length and a uniform distance apart and the loads are spaced uniformly at a distance equal to that between the vertical sections so that each load reaches a vertical section or exits from a vertical section simultaneously with all the other loads. As already noted this situation involves in the known art the maximum difference between minimum and maximum traction of the chain whereas in a system in accordance with the invention, similarly to the above description, it is the motors 15 which compensate for the variations in effort in the system.

Since the motors are all actuated and deactuated simultaneously it is possible to use a single sensor 16 at the entrance of any one of the vertical sections and a single sensor 17 at the exit of any one of the vertical sections and use their load passage signals for actuation of all the motors 15, thus simplifying installation and operation of the system.

The above descriptions are given as examples of the innovating principles claimed and are not intended as limiting the scope of the present patent right.

For example the sensors 16 and 17 can be of any type (optical, proximity, etc.) and not necessarily mechanical switches. Said switches could even be eliminated and replaced by periodic actuation of the motors 15 based on the travel speed of the chain so as to coincide with the beginning of ascent and descent of the loads.

Similarly the operating cycle described can be changed in accordance with specific operational requirements. For example the controller could rotate the tractive motor at a higher speed when the loads are all on the horizontal sections so as to minimize traversing times between the work stations.

Finally the path of the chain shown in the annexed drawing is clearly schematic and given as an aid to the description. The vertical descending sections can be separated from the corresponding ascents by insertion of horizontal sections.

The distinction between horizontal and vertical sections is intended in a broad sense since said sections may be inclined in various ways in more or less vertical or horizontal directions as will be readily understood by those skilled in the art.

## Claims

1. Chain conveyor of the type carrying a plurality of loads and having a tractive motor with controlled speed and a plurality of virtually vertical and horizontal sections characterized in that it comprises at the exit of each vertical section an intermittently operating motorized tractive sprocket and a control device connected to the motor of each motorized sprocket for actuation thereof and to selective consent means for actuation of said motorized sprockets, there being actuated by a load a motorized sprocket at the beginning of the corresponding vertical section, whether ascending or descending, and said sprocket being deactuated at the end of said vertical section to allow traction of said sprocket as it idles.

2. Conveyor in accordance with claim 1 characterized in that said selective consent means comprise at vertical sections a first sensor for detecting the passage of a load in the starting position of the vertical section and a second load passage detecting sensor in the end position of the vertical section.

3. Conveyor in accordance with claim 2 characterized in that said first and second sensors are positioned at each vertical section, said sensors being connected to the control device in such a manner that they send it consent for actuation and deactuation respectively of the motorized sprocket at the exit of the corresponding vertical section.

4. Conveyor in accordance with claim 1 characterized in that the vertical sections are of virtually the same length and uniformly spaced at a distance equal to that between the loads so that each load reaches or leaves a vertical section simultaneously with all the other loads.

5. Conveyor in accordance with claims 2 and 4 characterized in that the sensors are placed at a single vertical section said sensors being connected to the control device in such a manner as to send it consent for simultaneous actuation and simultaneous deactuation of all the motorized sprockets.

6. Conveyor in accordance with claim 1 characterized in that the tractive motor is commanded to rotate at a higher speed when no load is present at the vertical sections.

7. Conveyor in accordance with claim 1 characterized in that the motors of the motorized sprockets are synchronous motors with ON-OFF operation.

8. Conveyor in accordance with claim 2 characterized in that first and second sensors are realized in the form of electrical switches actuated by the passage of the load.